# EUROPEAN PATENT SPECIFICATION

(11) **EP 2 266 440 B1**
(45) Date of publication and mention of the grant of the patent: **08.07.2015**
(21) Application number: 09720517.3
(22) Date of filing: 13.03.2009
(51) Int. Cl.: F16F 9/12, A47C 1/121, B60N 2/44

(54) **IMPROVEMENTS TO PATENT P200603269 FOR AN "AUTOMATIC ROTATION SYSTEM FOR TILTING SEATS OF CHAIRS OR ARMCHAIRS"**
VERBESSERUNGEN AN PATENT P200603269 FÜR EIN AUTOMATISCHES DREHSYSTEM ZUM KIPPEN VON SITZFLÄCHEN VON STÜHLEN ODER SESSELN
AMÉLIORATIONS APPORTÉES AU SYSTÈME DÉCRIT DANS LE BREVET P200603269 RELATIF À UN "SYSTÈME ROTATIF AUTOMATIQUE POUR ASSISES À BASCULE DE CHAISES OU DE FAUTEUILS"

(30) Priority: 13.03.2008 ES 200800735
(43) Date of publication of application: 29.12.2010
(73) Proprietor: Figueras International Seating S.L., 08186 Lliçá d'Amunt (Barcelona) (ES)
(72) Inventor: FIGUERAS MITJANS, José, E-08186 Lliçá d'Amunt (Barcelona) (ES)
(74) Representative: Intès, Didier Gérard André
(86) International application number: PCT/ES2009/000140
(87) International publication number: WO 2009/112620

(56) References cited:
- WO-A1-2006/029473
- GB-A- 224 687
- GB-A- 2 288 450
- US-A- 3 098 677
- US-A- 5 257 852
- US-A1- 2003 183 039
- US-A1- 2005 045 439
- US-A1- 2006 207 844
- US-A1- 2006 207 844
- US-A1- 2006 278 774

## Description

### Field of the Art

The present invention relates to the chairs or armchairs having a seat which can be tilted between a lowered use position and a raised folded position.

### State of the Art

There are chairs and armchairs the seat of which is arranged in a rotation assembly which allows the tilting between a lowered use position and a raised folded position, solutions being known in which said assembly of the tilting seats includes a spring acting in the direction of taking the seat to the raised folded position, which determines an automatic actuation for raising the seat to said raised folded position when it is vacated.

Conventional solutions of said automatic arrangement for actuating the tilting seats towards the raised folded position include a torsion spring which is arranged tensioned between respective parts of the rotating assembly of the seat which can rotate in relation to one another.

This rotation arrangement of the seats with a tensioned torsion spring has the drawback that an accelerated action of the spring is completely free and causes an accelerated tilting movement of the seat in its rise, which gives rise to an abrupt blow when the seat reaches the stop of the raised position, causing noise and, with successive actuations, misalignments of the assembly.

To solve that problem, patent P200603269 discloses a system for a tilting seat assembly with rotation supports each formed by two complementary components associated with rotational movement with respect to each other, with stops for limiting the rotation in a determined angular path, there being arranged between those two components of the mentioned rotation supports a coil spring straddling a drum-shaped conformation of one of the components of the rotation support, such that said spring exerts an action of pressure and friction on the drum-shaped conformation, determining a braking which makes the seat be raised without acceleration, but rather, on the contrary, progressively reducing the speed of the raising movement.

With this solution, the abrupt blow of the seats in their tilting to the raised position is prevented, but the movement of the seat in the raising path is slow since the reduction of the speed is progressive from the start to the end of said path.

There are, on the other hand, solutions of rotation supports including a viscous product, such as silicone, between the parts associated with relative rotation with respect to one another which form the rotating supports, such that the viscous product determines a braking between the two parts of the support, making the rotation movement between them be uniform, without acceleration.

This solution also prevents the abrupt blow of the seats at the raising stop, but the tilting movement of the seat is slow and, furthermore, with the conventional assemblies of these solutions there is the problem of losses due to leakages, which makes the braking systems lose its effectiveness.

Another solution has been proposed in UK Patent Application GB 2 288 450.

### Object of the Invention

According to the present invention, improvements are proposed which combine the solution of the traction and braking spring proposed by patent P200603269 with the inclusion of a viscous product between the component parts of the rotation supports of the tilting seats, achieving functional features which determine an action for automatically raising the tilting seats in more advantageous conditions.

According to this invention, the automatic rotation supports of the tilting seats are made up of two complementary components associated with rotational motion with respect to each other, with stops for limiting the rotation in a determined angular path, there being included between those two components a coil spring arranged in a traction assembly and straddling a drum-shaped part which is fixed inside one of the components of the corresponding rotation support.

An arrangement is thus obtained in which the traction spring exerts a rotational force between the two components of the rotation support, causing the actuation for automatically raising the seat to which it is applied, but in such a manner that at the same time said spring exerts a braking on the rotation action, as a result of the friction of its coils on the drum-shaped part and because of the pressure it exerts on said part due to the tension.

The drum-shaped part on which the rotation-actuating spring is incorporated, and the corresponding outer part of that component of the rotation support, define together an annular channel, in which a ring and a high-viscosity silicone filler are included, said ring being linked in a rotating association with the other component part of the rotation support.

An assembly is thus obtained in which, when the two components of the rotation support rotate with respect to one another, the ring which is housed in the annular channel together with the silicone exerts a braking effect due to the friction with the silicone, determining a restraint which, applied to the tilting seats, prevents the acceleration in the automatic raising of said seats due to the action of the actuating spring.

The rotating association link between the braking ring and the actuating component of the rotation support is established by means of a projecting stem of the actuating part, and an elongated groove of the ring, in which said stem is fitted.

The rotating actuation of the ring due to the action of the actuating part thereby has an inoperative path corresponding to the movement of the stem of the actuating part through the groove of the ring, such that in its application to tilting seats the braking of the tilting movement of said seats only occurs after said inoperative path, whereby the tilting of the seat, both in the raising and in the lowering, has.an initial fast movement path and a final slow movement path due to the braking.

The arrangement of the braking ring in the annular housing channel together with the silicone is established with edge closures by means of O-rings to prevent the leakage of the silicone, while the walls of the annular housing channel define serrations keeping the ring centered in the channel, said serrations forming, in the proximity of the ends of the angular path of the stem for rotationally pulling of the ring, two groups of tooth-shaped transverse serrations, which rub like scrapers against the faces of the ring, preventing the leakage of the silicone through those areas.

With such an arrangement, the rotation support combines the actuating and braking action of the traction spring between the two rotating components with the braking action of the silicone at the end part of the paths of the rotating movement between the components, so that in the tilting application seat, the tilting movements thereof occur with a fast movement at the beginning and with a slow movement at the end, preventing the abrupt blow at the end stop of the paths, and this with an arrangement which effectively prevents the loss of silicone, the effectiveness of the operation therefore remaining unalterable.

The improvements of the invention therefore determine an embodiment which has truly advantageous features, this embodiment acquiring its own identity and a preferred character for the function of the rotation of the tilting seats with automatic raising, compared to the solutions used up until now for said function.

### Description of the Drawings

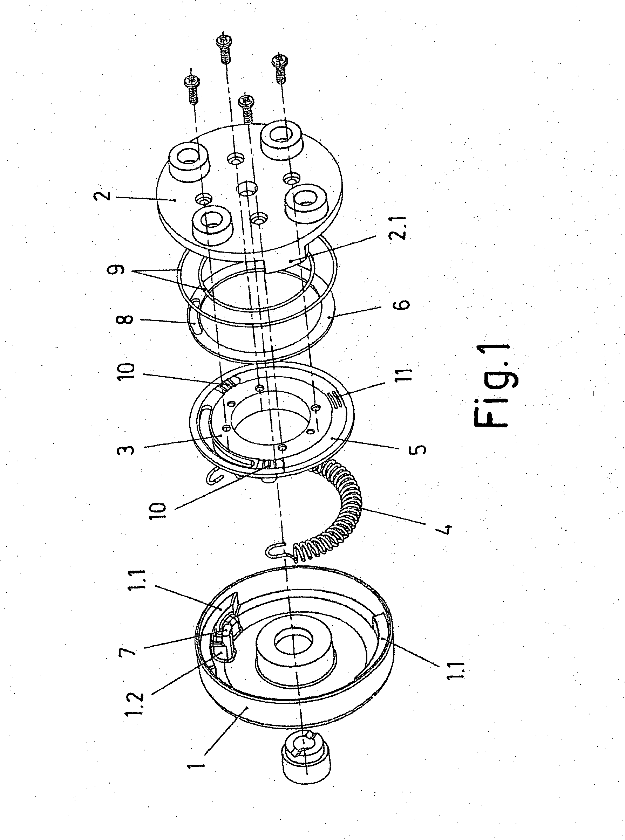

Figure 1 shows an exploded perspective view of an embodiment of a rotation support for tilting seats, according to the invention.

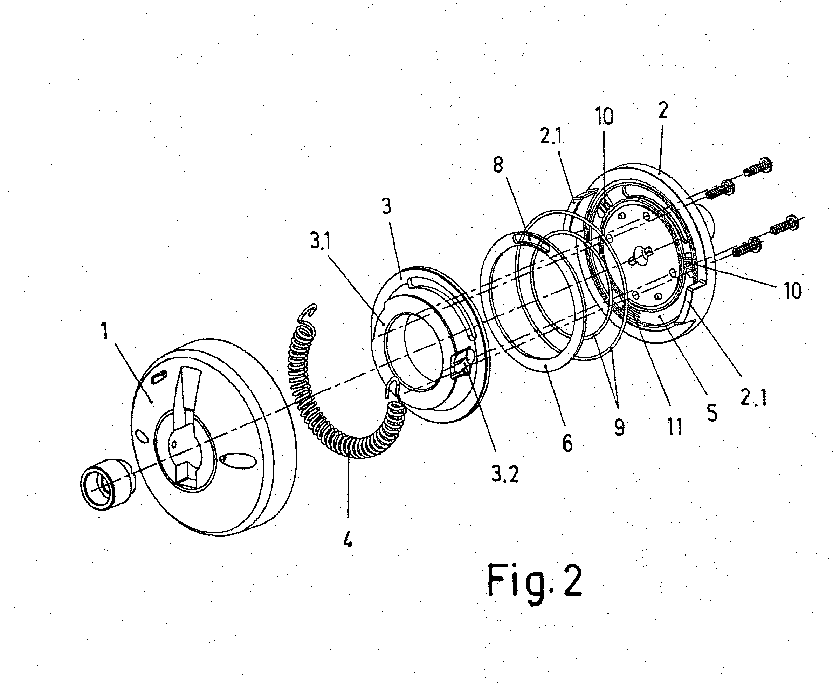

Figure 2 is an exploded perspective view of the same rotation support of the previous figure, from another angle of observation.

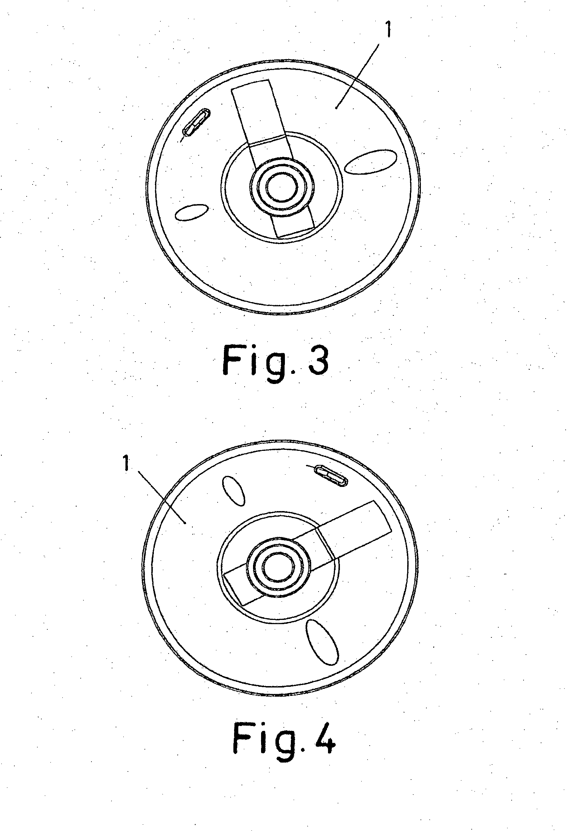

Figure 3 is a front view of the rotation support at the part for coupling to the seat to which it is applied, in an end position of the rotation.
Figure 4 is a view like that of the previous figure, in the other end position of the rotation between the parts of the rotation support.

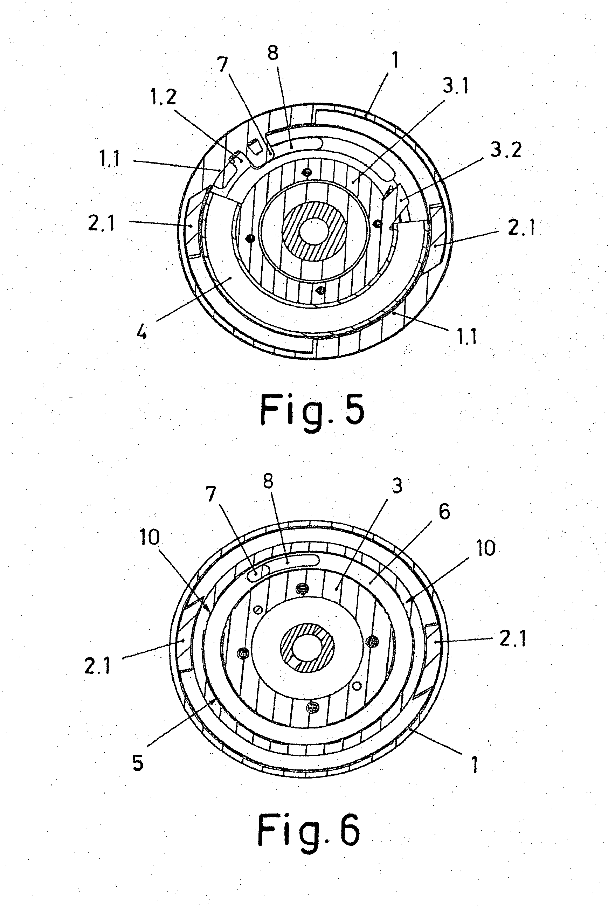

Figure 5 is a view of the rotation support, according to a section perpendicular to the axis thereof through the area in which the spring for actuating the rotation between the component parts is located, in the position of Figure 3.
Figure 6 is a view of the rotation support, according to a section perpendicular to the axis thereof through the area in which the ring for braking by silicone is located, in the position of Figure 3.

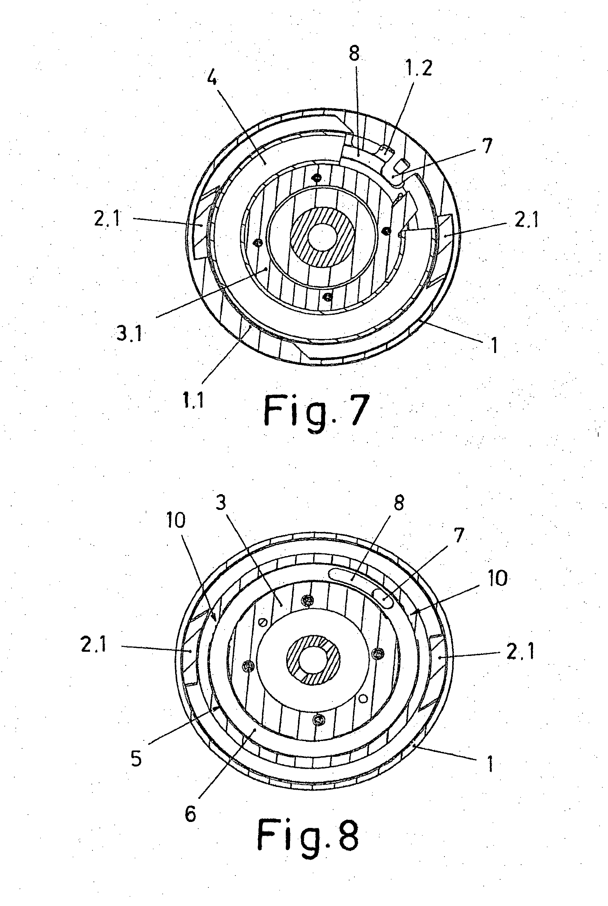

Figure 7 is a view according to the section of Figure 5, in the position of Figure 4.
Figure 8 is a view according to the section of Figure 6, in the position of Figure 4.

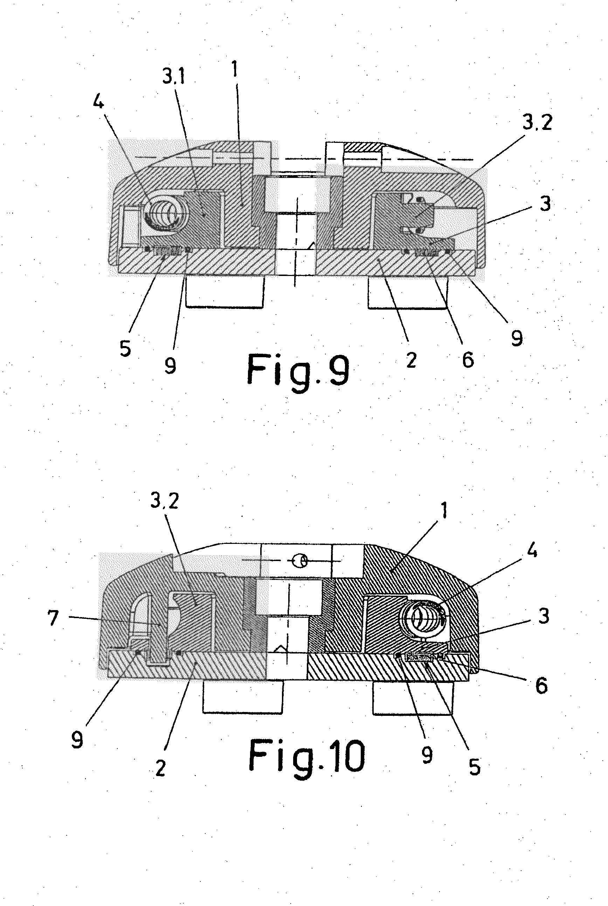

Figure 9 is a view of the rotation support according to a diametric section.
Figure 10 is a view of the rotation support according to a diametric section through a plane different from that of the previous figure.

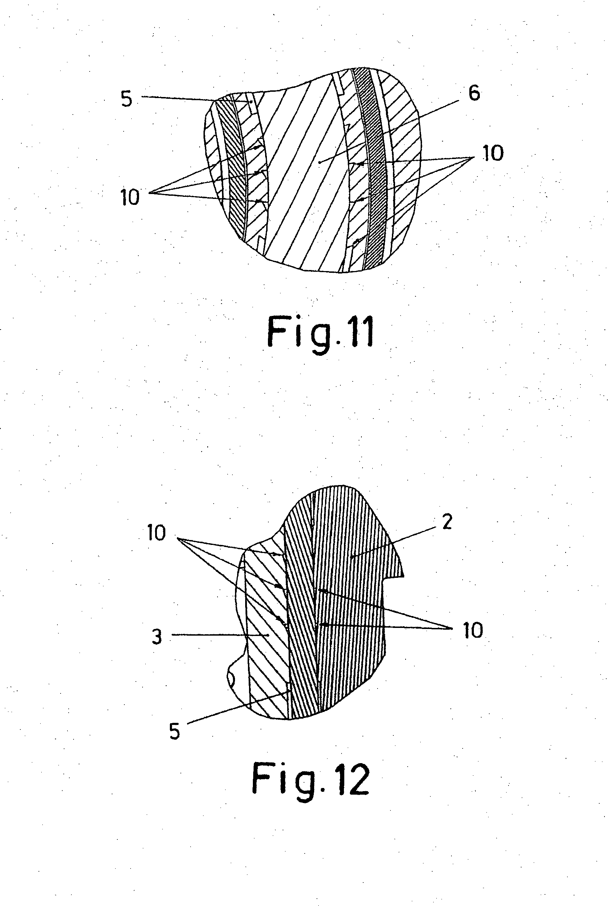

Figure 11 is an enlarged detail of a front view of one of the toothed areas for retaining the silicone in the housing of the rotating ring.
Figure 12 is an enlarged detail in a side view of the area of the previous figure.

### Detailed Description of the Invention

The object of the invention relates to improvements with which an embodiment is obtained which improves the functionality of the system proposed by patent P200603269, for application in the assembly of tilting seats of chairs or armchairs with automatic raising.

The assembly of the tilting seats of application of the system which the invention relates to is established by means of rotation supports comprising two complementary components (1 and 2), one of which is intended to be fixed to the seat of application, whereas the other one is fixed on the structure of the corresponding chair or armchair.

Said components (1 and 2) are coupled in an assembly with rotational movement between them, with stops (1.1 and 2.1) establishing a limitation of the rotation in a determined angular path, a part (3) being incorporated attached on the inside of one of the components, for example the component (2), which part (3) determines a protruding drum-shaped conformation (3.1) in axial projection.

A coil type spring (4) is incorporated between the components (1 and 2), which spring is placed straddling the conformation (3.1) of the part (3), said spring (4) being hooked at its ends with tension between two conformations (1.2 and 3.2) belonging, respectively, to the component (1) of the rotation support and to the part (3) which is attached to the component (2).

There is thus an arrangement in which the spring (4) determines a tension which makes the components (1 and 2) tend towards one of the limit positions of the angular rotation between them, said spring (4) exerting pressure on the area of support on the conformation (3.1), such that when the components (1 and 2) rotate in relation to one another, as a result of that support of the spring (4) on the conformation (3.1), there is a braking effect on the rotation, due to the pressure and to the friction exerted by the spring (4) itself on the surface of the mentioned conformation (3.1).

Between the part (3) and the component (2) to which said part (3) is attached, there is determined an annular channel (5), in which there is included a ring (6) which has freedom of rotational movement inside said annular channel (5).

A high-viscosity silicone filler is furthermore included in the annular channel (5), such that the ring (6) is embedded in said silicone filler, whereby the rotational movement of the mentioned ring (6) is braked due to the friction with the silicone, the viscosity of which it must overcome.

The ring (6) is linked with the component (1) of the rotation support by means of a stem (7) emerging from said part (1) and fitted in a groove (8) of the ring (6), such that when the component (1) rotates with respect to the component (2), the stem (7) pulls the ring (6), whereby the latter in turn rotates with respect to the component (2), inside the channel (5), said ring (6) being braked in this movement by the viscosity of the silicone filling the channel (5), and the relative movement between the components (1 and 2) being consequently braked by a restraint which smoothes the movement.

The groove (8) of the ring (6) is elongated, so that the pulling action of the stem (7) is only effective when said stem (7) acts on the ends of said groove (8), whereby the rotation movements between the components (1 and 2) occur with a first path without a braking effect by the ring (6), in the segment corresponding to the travel of the stem (7) through the groove (8), and with a final braked path, in the segment corresponding to the movement in which the ring (6) is pulled, from the moment in which the stem (7) pushes the end of the groove (8).

Thus, in the application of the rotation support to the assembly of a tilting seat, the spring (4) exerts an action tending to tilt the seat to the raised folded position when it is vacated, but as a result of the braking effect performed by the spring (4) itself due to the friction and pressure on the conformation (3.1) of the part (3) on which it is supported, together with the braking effect which is in turn determined by the ring (6) when it is pulled by the stem (7), the tilting movements of the seat occur with an initial fast path and with a final slow path, a relatively fast movement being obtained as a whole, but with the ends of the paths being made smoother, which prevents an abrupt blow at the stop of said ends of the path.

To prevent the leakage of the silicone which is included in the annular channel (5) together with the mobile ring (6), between the part (3) and the component (2) on which said part (3) is fixed there are 0-rings (9) by means of which a sealed closure is established on both sides of the annular channel (5), whereas in the proximity of the ends of the path of the stem (7) in the pulling movement of the ring (6), the walls of the annular channel (5) define groups of transverse tooth-shaped serrations (10), which rub against the ring (6) like scrapers to prevent the latter from pulling, adhered thereto, beyond those areas, the silicone which is in the closed part of the channel (5). The serrations (10) of each area can have progressive heights, whereby the action of the scraping against the ring (6) occurs accordingly in a progressive manner, thereby determining a completely effective cleaning action on the ring (6).

In another area or other areas of the annular channel (5), other serrations (11) oriented in a longitudinal direction are laterally provided to keep the ring (6) centered in said channel (5), so that the filler silicone effectively performs the braking function with respect to said ring (6).

## Claims

1. Automatic rotation system for tilting seats of chairs or armchairs, comprising a rotation support formed by a first and a second complementary components (1, 2) associated with rotational movement in relation to one another, with stops for limiting the rotation in a determined angular path, including between the two components (1, 2) a coil spring (4) arranged in a rotating traction assembly between both components (1, 2), wherein the traction spring (4) is assembled straddling a part (3) which is fixed inside the second component (2) of the rotation support, defining between said part (3) and the component (2) on which it is fixed an annular channel (5), in which a ring (6) is received together with a high-viscosity silicone filler, said ring (6) having freedom of rotational movement inside the annular channel (5), against the viscosity of the filler silicone, with a rotation actuation link between said ring (6) and the first component (1) of the rotation support
, and **characterized in that** the rotation actuation link between the first component (1) of the rotation support and the ring (6) is defined by a pulling stem (7) emerging from the first component (1) and fitted in a groove (8) of the ring (6), said groove (8) determining an elongated configuration in the longitudinal direction of the ring (6), such that the actuation of the rotation of the first component (1) has an inoperative path on the ring (6) during the shifting of the rod (7) through the groove (8) and a path with a ring (6) pulling action when the rod (7) pushes against the end of the groove (8)

2. The Automatic rotation system for tilting seats of chairs or armchairs according to claim 1, **characterized in that** sealing O-rings (9) are included between the part (3) straddled by the spring (4) and the second component (2) to each side of the annular channel (5), whereas in the proximity of the end areas of the path for actuating the rotation of the ring (6) by means of the stem (7), the walls of the annular channel (5) determine groups of serrations (10) in the form of teeth, which rub on the ring (6) like scrapers, preventing the leakage of silicone adhered thereto.

## Patentansprüche

1. Automatisches Drehsystem zum Kippen von Sitzflächen von Stühlen oder Sesseln, umfassend eine Drehhalterung, die durch eine erste und eine zweite komplementäre Komponente (1, 2), welche mit Drehbewegung in Bezug aufeinander in Verbindung stehen, gebildet wird, mit Anschlägen zum Begrenzen der Drehung in einem bestimmten Winkelweg, umfassend eine Spiralfeder (4) zwischen den beiden Komponenten (1, 2), die in einer Dreh-Zieh-Anordnung zwischen beiden Komponenten (1, 2) angeordnet ist, wobei die Zugfeder (4) so angeordnet ist, dass sie ein Teil (3) überspannt, welches innerhalb der zweiten Komponente (2) der Drehhalterung befestigt ist und zwischen dem Teil (3) und der Komponente (2), an der sie befestigt ist, einen ringförmigen Kanal (5) definiert, in welchem ein Ring (6) gemeinsam mit einem hochviskosen Silikonfüller aufgenommen wird, wobei der Ring (6) innerhalb des ringförmigen Kanals (5) Drehbewegungsfreiheit gegen die Viskosität des Füllersilikons hat, mit einer Drehbetätigungsverbindung zwischen dem Ring (6) und der ersten Komponente (1) der Drehhalterung,
und **dadurch gekennzeichnet, dass** die Drehbetätigungsverbindung zwischen der ersten Komponente (1) der Drehhalterung und dem Ring (6) durch eine Zugstange (7) definiert ist, die von der ersten Komponente (1) vorsteht und in eine Nut (8) des Rings (6) eingepasst ist, wobei die Nut (8) eine längliche Ausgestaltung in der Längsrichtung des Rings (6) festlegt, derart, dass die Betätigung der Drehung der ersten Komponente (1) einen funktionsunfähigen Weg an dem Ring (6) während des Verschiebens der Stange (7) durch die Nut (8) und einen Weg mit einer Zugwirkung auf den Ring (6), wenn die Stange (7) gegen das Ende der Nut (8) drückt, aufweist.

2. Automatisches Drehsystem zum Kippen von Sitzflächen von Stühlen oder Sesseln nach Anspruch 1, **dadurch gekennzeichnet, dass** zwischen dem Teil (3), das durch die Feder (4) überspannt wird, und der zweiten Komponente (2) zu jeder Seite des ringförmigen Kanals (5) dichtende O-Ringe (9) vorgesehen sind, wogegen in der Nähe der Endbereiche des Wegs zum Betätigen der Drehung des Rings (6) mittels der Stange (7) die Wände des ringförmigen Kanals (5) Gruppen von Verzahnungen (10) in Form von Zähnen bestimmen, die an dem Ring (6) wie Schaber reiben und das Austreten von daran angehaftetem Silikon verhindern.

## Revendications

1. Système de rotation automatique pour l'inclinaison d'assises de chaises ou de fauteuils, comportant un support de rotation formé par des premier et deuxième composants complémentaires (1, 2) associés à un mouvement de rotation l'un par rapport à l'autre, avec des butées destinées à limiter la rotation dans un passage angulaire déterminé, comprenant entre les deux composants (1, 2) un ressort hélicoïdal (4) disposé dans un ensemble de traction de rotation entre les deux composants (1, 2), dans lequel le ressort de traction (4) est assemblé en enjambant une partie (3) qui est fixée à l'intérieur du deuxième composant (2) du support de rotation, définissant entre ladite partie (3) et le composant (2) sur lequel elle est fixée un canal annulaire (5), dans lequel une bague (6) est reçue avec une charge de silicone de grande viscosité, ladite bague (6) ayant une liberté de mouvement de rotation à l'intérieur du canal annulaire (5), à l'encontre de la viscosité du silicone de charge, avec une liaison d'actionnement de rotation entre ladite bague (6) et le premier composant (1) du support de rotation, et **caractérisé en ce que** la liaison d'actionnement de rotation entre le premier composant (1) du support de rotation et la bague (6) est définie par une tige de traction (7) qui sort du premier composant (1) et montée dans une rainure (8) de la bague (6), ladite rainure (8) déterminant une configuration allongée dans la direction longitudinale de la bague (6), de telle sorte que l'actionnement de la rotation du premier composant (1) a un passage inactif sur la bague (6) pendant le déplacement de la tige (7) à travers la rainure (8) et un passage avec une action de traction de bague (6) quand la tige (7) pousse contre l'extrémité de la rainure (8).

2. Système de rotation automatique pour l'inclinaison d'assises de chaises ou de fauteuils selon la revendication 1, **caractérisé en ce que** des joints toriques d'étanchéité (9) sont inclus entre la partie (3) enjambée par le ressort et le deuxième composant (2) de chaque côté du canal annulaire (5), alors qu'à proximité des zones d'extrémité du passage pour l'actionnement de la rotation de la bague (6) au moyen de la tige (7), les parois du canal annulaire (5) déterminent des groupes de stries (10) sous forme de dents, qui frottent sur la bague (6) à la manière de grattoirs, en empêchant la fuite du silicone ayant adhéré dessus.
